# EUROPÄISCHE PATENTANMELDUNG

(11) **EP 4 599 916 A1**
(43) Veröffentlichungstag der Anmeldung: **13.08.2025**
(21) Anmeldenummer: 24219036.1
(22) Anmeldetag: 11.12.2024
(51) Int. Cl.: B01D 46/10, B01D 46/00

(54) **FILTERVORRICHTUNG**

(30) Priorität: 18.01.2024 DE 202024100249 U
(71) Anmelder: Microair Sp.z.o.o., 58-100 Swidnica (PL)
(72) Erfinder: MÜLLER, Stefan, 45739 Oer-Erkenschwick (DE)
(74) Vertreter: Patentanwälte Dr. Keller, Schwertfeger Partnerschaft mbB

(57) **Zusammenfassung**

Die vorliegende Erfindung betrifft eine Filtervorrichtung geeignet für den Einsatz in Fahrzeugen (10) umfassend einen Filter (20) mit einem Filtermedium (22) und einer rahmenartigen Halterung (24) mit wenigstens zwei Rahmenelementen (26, 28), wobei das Filtermedium (22) in der Halterung (24) befestigt ist, ein verlagerbares Bauteil mit einer ersten Befestigungsstelle (50) und einer zweiten Befestigungsstelle (52), eine bewegliche Verbindungsvorrichtung (56), eine starre Verbindungsvorrichtung (54), wobei das erste Rahmenelement (26) mittels der starren Verbindungsvorrichtung (54) an der ersten Befestigungsstelle (50) mit dem verlagerbaren Bauteil verbunden ist, wobei das zweite Rahmenelement (28) mittels der beweglichen Verbindungsvorrichtung (56) an der zweiten Befestigungsstelle (52) mit dem verlagerbaren Bauteil verbunden ist, und wobei das zweite Rahmenelement (28) gegenüber dem verlagerbaren Bauteil beweglich ist.

## Beschreibung

Die vorliegende Erfindung betrifft eine Filtervorrichtung geeignet für den Einsatz in Fahrzeugen.

Insbesondere bei Fahrzeugen wie etwa Baumaschinen und Offroad-Fahrzeugen, die sich in staubbeladener oder mit Schadstoffen belasteter Umgebung bewegen, ist es zum Schutz des Fahrers und der Fahrgäste notwendig, dass die Frischluft, welche in die Fahrzeugkabine bzw. in den Fahrzeuginnenraum geführt wird, vorher entsprechend gefiltert wird.

Aus diesem Grund befinden sich insbesondere bei Fahrzeugen, die im Offroad-Bereich verwendet werden, entsprechende Filtervorrichtungen, um die in die Fahrzeugkabine oder in den Fahrzeuginnenraum strömende Frischluft zu reinigen. Je nach Einsatzbereich und Umgebungsbedingungen werden hierbei Filter unterschiedlicher Klassen eingesetzt, um die in den Fahrgastraum bzw. in die Fahrerkabine einströmende Frischluft zu reinigen.

Unabhängig von den äußeren Umgebungsbedingungen und der gewählten Filterklasse besteht bei allen Filtersystemen das Problem, dass diese sich während des Betriebs der entsprechenden Fahrzeuge im Laufe der Zeit mit Staub bzw. Schadstoffen zusetzen und ihre Funktion verlieren. Die Folge ist, dass die Filter entsprechend ausgetauscht bzw. gereinigt werden müssen. Ein Austausch eines Filters führt zu unerwünschten Wartungszeiten und somit Standzeiten des Fahrzeugs. Darüber hinaus fallen zusätzliche Kosten für den Kauf eines neuen, unbenutzten Filters an. Wird anstelle eines neuen unbenutzten Filters der vorhandene Filter gereinigt, ist dies in der Regel mit zusätzlichem Personal- und Kostenaufwand verbunden. Insbesondere bei Filtern mit hoher Filterklasse ist eine Reinigung häufig auch noch mit dem Risiko verbunden, dass das feine Filtermedium beschädigt oder sogar zerstört wird.

Es besteht somit der Wunsch nach Filtervorrichtungen für den Einsatz in Fahrzeugen und mobilen Arbeitsmaschinen, bei denen der Filter, insbesondere das Filtermedium eine im Vergleich zu bekannten Filtervorrichtungen erhöhte Standzeit bei vergleichbaren Umgebungsbedingungen aufweist.

Es ist daher Aufgabe der vorliegenden Erfindung, eine Filtervorrichtung geeignet für den Einsatz in Fahrzeugen bereitzustellen, die eine im Vergleich zu bekannten Filtervorrichtungen längere Laufzeit zwischen zwei Wartungen hat.

Erfindungsgemäß wird die Aufgabe mit einer Filtervorrichtung gemäß Anspruch 1 gelöst. Insbesondere umfasst die Filtervorrichtung, die für den Einsatz in Fahrzeugen und mobilen Arbeitsmaschinen geeignet ist, einen Filter mit einem Filtermedium und einer rahmenartigen Halterung mit wenigstens zwei Rahmenelementen, wobei das Filtermedium in der Halterung befestigt ist, ein verlagerbares Bauteil mit einer ersten Befestigungsstelle und einer zweiten Befestigungsstelle, eine bewegliche Verbindungsvorrichtung und eine starre Verbindungsvorrichtung, wobei das erste Rahmenelement mittels der starren Verbindungsvorrichtung an der ersten Befestigungsstelle mit dem verlagerbaren Bauteil verbunden ist, wobei das zweite Rahmenelement mittels der beweglichen Verbindungsvorrichtung an der zweiten Befestigungsstelle mit dem verlagerbaren Bauteil verbunden ist, und wobei das zweite Rahmenelement gegenüber dem verlagerbaren Bauteil beweglich ist.

Unter dem Begriff Fahrzeuge werden hier sowohl Straßenfahrzeuge, Baumaschinen, Geländefahrzeuge, Landmaschinen als auch mobile Arbeitsmaschinen verstanden. Vorzugsweise werden die Fahrzeuge auf Baustellen und/oder in schwierigem Gelände eingesetzt.

Es wurde festgestellt, dass ein Selbstreinigungseffekt eines mit Partikeln, insbesondere Staubpartikeln oder Schadstoff beladenen Filtermediums bereits dann eintritt, wenn die Halterung, in dem sich das Filtermedium befindet, an einem Bauteil befestigt und dabei beweglich gegenüber dem Bauteil gelagert ist, so dass eine Relativbewegung zwischen der Halterung des Filtermediums und dem Bauteil und dadurch eine Relativbewegung zwischen dem Filtermedium und dem Bauteil möglich ist. Allein die Relativbewegung zwischen Halterung und Bauteil sorgt dafür, dass im Filtermedium enthaltende Partikel aus dem Filtermedium herausgelangen, insbesondere herausfallen.

Mittels der vorliegenden Erfindung kann der Selbstreinigungseffekt kann verbessert werden: Da zumindest ein Teil der Halterung des Filters, nämlich das zweite Rahmenelement, mittels der beweglichen Verbindungsvorrichtung mit dem verlagerbaren Bauteil beweglich verbunden ist, bewirkt die Trägheit, dass zumindest das zweite Rahmenelement der Halterung eine andere Bewegung ausführt als das verlagerbare Bauteil, wenn das verlagerbare Bauteil Bewegungsänderungen in Form von Richtungs- und Geschwindigkeitsänderungen durchführt. Da das erste Rahmenelement starr mit dem verlagerbaren Bauteil verbunden ist, bedeutet dies, dass bei Bewegungsänderungen des verlagerbaren Bauteils auch das erste Rahmenelement eine andere Bewegungsform ausführt als das zweite Rahmenelement. Das Filtermedium des Filters ist wiederum fest mit der Halterung verbunden, so dass die Bewegung des zweiten Rahmenelements auf zumindest einen Teil des Filtermediums übertragen wird. Insbesondere führt dies dazu, dass das Filtermedium zumindest abschnittsweise gestaucht oder gedehnt wird.

Dieser Effekt wird ausgenutzt, um im Filtermedium gesammelte Partikel aus dem Filtermedium herauszulösen.

Fahrzeuge wie etwa Baumaschinen oder Offroad-Fahrzeuge werden häufig in staubiger, insbesondere belasteter Umgebung eingesetzt. Bei diesen Fahrzeugen ist daher mit einem häufigen Filterwechsel einer eingebauten Filtervorrichtung zu rechnen. Diese Fahrzeuge bewegen sich in vielen Fällen auf schwierigem Gelände, so dass die Fahrzeuge oft Stößen ausgesetzt sind und/oder während der Fahrt häufig Geschwindigkeits- oder Bewegungsrichtungsänderungen erfolgen. Die wechselnden Bewegungen des Fahrzeugs auf schwierigem Gelände können genutzt werden, um das zweite Rahmenelement in Bewegung zu versetzen.

Es wurde nämlich festgestellt, dass oben genannter Selbstreinigungseffekt eines mit Staub oder Schadstoff beladenen Filtermediums dann eintritt, wenn bewusst eine Relativbewegung zwischen zumindest einem Teil der Halterung des Filtermediums bzw. dem Filtermedium selbst und einem vorzugsweise starr mit einem Fahrzeug verbundenen Bauteil besteht.

Bisher werden bei Baumaschinen und Offroad-Fahrzeugen Kabinenzuluftfilter starr in ein Filteraufnahmegehäuse, insbesondere in eine rahmenartige Halterung, eingebaut, wobei das Filteraufnahmegehäuse dann wieder starr mit der Baumaschine und anderen Offroad-Fahrzeugen verbunden ist. Eine Relativbewegung zwischen dem Filter, insbesondere zwischen dem Filtermedium, und dem Fahrzeug ist nicht vorgesehen.

Wird beispielsweise ein Fahrzeug in Bewegung versetzt, bewegt sich das mit dem Fahrzeug verbundene Bauteil. Das Bauteil ist somit verlagerbar. Vorteilhafterweise ist das Bauteil starr mit dem Fahrzeug verbunden, so dass die Bewegung des Fahrzeugs mittels des verlagerbaren Bauteils direkt auf die starre Verbindungsvorrichtung übertragen wird und die starre Verbindungsvorrichtung dem Bewegungsmuster des verlagerbaren Bauteils folgt. Da zumindest ein Teil der Halterung des Filters, nämlich das zweite Rahmenelement, mittels der beweglichen Verbindungsvorrichtung mit dem verlagerbaren Bauteil beweglich verbunden ist, bewirkt die Trägheit, dass zumindest das zweite Rahmenelement der Halterung eine andere Bewegung ausführt als das verlagerbare Bauteil, wenn das verlagerbare Bauteil Bewegungsänderungen in Form von Richtungs- und Geschwindigkeitsänderungen durchführt. Da das erste Rahmenelement starr mit dem verlagerbaren Bauteil verbunden ist, bedeutet dies, dass bei Bewegungsänderungen des verlagerbaren Bauteils auch das erste Rahmenelement eine andere Bewegungsform ausführt als das zweite Rahmenelement.

Bei einem sich bewegenden verlagerbaren Bauteil, wie etwa einem Fahrzeug oder einem mit einem Fahrzeug verbundenen Gehäuseteil, ist es bei dieser Filtervorrichtung somit nicht notwendig, zusätzliche Energiequellen vorzusehen, um das Filtermedium selbst in Bewegung zu versetzen, insbesondere zu dehnen oder zu stauchen.

Bei einer bevorzugten Ausführungsform ist wenigstens ein Anschlag vorgesehen, der vorzugsweise mit dem zweiten Rahmenelement der Halterung wechselwirkt. Dieser Anschlag sorgt dafür, dass die Auslenkung des zweiten Rahmenelements begrenzt ist und eine Überdehnung des Filtermaterials verhindert wird. Dies hat zum einen den Vorteil, dass sich das zweite Rahmenelement oder sogar die gesamte Halterung nicht versehentlich von dem verlagerbaren Bauteil löst. Zum anderen führt der Anschlag dazu, dass das Filtermedium erschüttert wird, wenn zumindest ein Teil der Halterung an den Anschlag anschlägt. Die Erschütterung des Filtermediums bewirkt, dass Partikel wie etwa Staub aus dem Filtermedium abgeklopft werden.

Der Anschlag ist vorzugsweise an dem verlagerbaren Bauteil oder einem mit dem verlagerbaren Bauteil fest verbundenen zusätzlichen Bauteil befestigt.

Es ist von Vorteil, dass das erste Rahmenelement und/oder das zweite Rahmenelement starr ausgebildet sind. Insbesondere dann, wenn das zweite Rahmenelement starr ausgebildet ist, kann der Abklopfeffekt verbessert werden.

Um den Effekt des Dehnens oder Stauchens des Filtermediums zu verbessern, ist es von Vorteil, dass ein drittes Rahmenelement und ein viertes Rahmenelement vorgesehen sind, wobei das dritte Rahmenelement und/oder das vierte Rahmenelement elastisch, insbesondere dehnbar sind. Insbesondere dann, wenn bei einer viereckigen Halterung das erste Rahmenelement und das zweite Rahmenelement starr ausgebildet sind, besteht die Möglichkeit, das Filtermedium dadurch zu dehnen oder zu stauchen, indem das dritte Rahmenelement und/oder vierte Rahmenelement gedehnt oder gestaucht werden.

Es besteht natürlich auch die Möglichkeit, dass das erste und zweite Rahmenelement elastisch, insbesondere dehnbar und das dritte Rahmenelement und/oder das vierte Rahmenelement starr ausgebildet sind.

Bei einer bevorzugten Ausführungsform ist die rahmenartige Halterung rechteckig ausgebildet, wobei das erstes Rahmenelement und das zweite Rahmenelement jeweils starr ausgebildet und entgegengesetzt zueinander angeordnet sind und wobei das dritte Rahmenelement und/oder das vierte Rahmenelement elastisch, insbesondere dehnbar ausgebildet sind.

Bewegungsänderungen des verlagerbaren Bauteils führen bei dieser Ausführungsform dazu, dass das zweite Rahmenelement eine andere Bewegungsform ausführt als das entgegengesetzt liegende erste Rahmenelement. Der Abstand zwischen dem ersten Rahmenelement und dem zweiten Rahmenelement vergrößert oder verkleinert sich. Sind die erste und zweite Befestigungsstelle geeignet angebracht, besteht dadurch die Möglichkeit, dass das Filtermedium entlang seiner Längsachse gleichmäßig gedehnt oder gestaucht wird.

Bei einer alternativen Ausführungsform ist die rahmenartige Halterung rechteckig ausgebildet, wobei das erste Rahmenelement und das zweite Rahmenelement jeweils starr ausgebildet und benachbart zueinander angeordnet sind und wobei das erste Rahmenelement und das zweite Rahmenelement gelenkig miteinander verbunden sind. Das dritte Rahmenelement und/oder das vierte Rahmenelement sind elastisch, insbesondere dehnbar ausgebildet. Bei dieser Ausführungsform verändert sich der Winkel zwischen dem ersten Rahmenelement und dem zweiten Rahmenelement, wenn das zweite Rahmenelement eine andere Bewegungsform ausführt als das benachbart liegende erste Rahmenelement. Bei dieser Ausführungsform wird das Filtermedium fächerförmig gedehnt oder gestaucht.

Weiterhin ist es bevorzugt, dass die Verbindungsvorrichtung ein Lager, insbesondere ein reibungsarmes Lager umfasst. Mit Hilfe des Lagers lässt sich die Verlagerung des zweiten Rahmenelements gegenüber dem verlagerbaren Bauteil realisieren. Je geringer die Reibung des Lagers ist, desto zeitlich länger können sich die Bewegungen des verlagerbaren Bauteils und des zweiten Rahmenelements unterscheiden, so dass ein möglichst langer Zeitraum besteht, um das Filtermedium zu reinigen.

Die bewegliche Verbindungsvorrichtung kann ein Verbindungsteil mit zwei entgegengesetzt liegenden Enden umfassen, wobei an jedem Ende ein Befestigungselement vorgesehen ist. Die Befestigungselemente dienen dazu, die Verbindungsvorrichtung an dem verlagerbaren Bauteil bzw. an dem zweiten Rahmenelement zu befestigen. Das Befestigungselement kann ein separates Bauteil sein oder einstückig mit dem Verbindungsteil ausgebildet sein. In dem Verbindungsteil sind die beweglichen Teile vorgesehen, die eine Relativbewegung zwischen dem verlagerbaren Bauteil und dem zweiten Rahmenelement bewirken.

Um eine effektive Relativbewegung zwischen dem verlagerbaren Bauteil und dem zweiten Rahmenelement zu ermöglichen ist es von Vorteil, dass die bewegliche Verbindungsvorrichtung wenigstens ein Drehgelenk aufweist. Sinnvollerweise sind zwei Drehgelenke vorgesehen, die einerseits eine Drehbewegung zwischen dem verlagerbaren Bauteil und der Verbindungsvorrichtung und andererseits eine Drehbewegung zwischen dem zweiten Rahmenelement und der Verbindungsvorrichtung ermöglichen.

Zusätzlich oder alternativ kann das bewegliche Verbindungselement eine lineare Bewegung durchführen. Hierbei kann die Verbindungsvorrichtung ein Federelement, insbesondere ein Gummi-Metall Puffer und/oder eine Linearführung umfassen.

Um zu verhindern, dass der Filter bzw. das Filtermedium bereits bei kleinsten Bewegungsänderungen des verlagerbaren Bauteils in Bewegung versetzt wird, ist es von Vorteil, dass die Verbindungsvorrichtung ein Dämpfungselement, insbesondere eine Dämpfungsfeder aufweist.

Weiterhin ist es von Vorteil, dass eine zusätzliche Masse an der Halterung befestigt ist. Diese kann dazu dienen, die auf einen Anschlag wirkende Kraft zu erhöhen, um das Filtermedium effektiver von Staub- oder Schadstoffbeladung zu befreien.

Bei einer bevorzugten Ausführungsform weist das verlagerbare Bauteil ein Gehäuse auf, an dem die erste Befestigungsstelle und die zweite Befestigungsstelle vorgesehen sind, wobei das Gehäuse den Filter umgibt. Es versteht sich, dass zwischen Filter und Gehäuse ein entsprechender Abstand besteht, so dass zumindest ein Teil des Filters, insbesondere das zweite Rahmenelement in dem Gehäuse beweglich ist. Die Befestigungsstellen können an zwei verschiedenen Wänden des Gehäuses vorgesehen sein. Es besteht jedoch auch die Möglichkeit, die erste und die zweite Befestigungsstelle entfernt voneinander an derselben Gehäusewand anzubringen.

Das Gehäuse kann Teil einer verlagerbaren Vorrichtung, wie etwa ein Teil der Karosserie eines Fahrzeugs sein oder ein separates Teil, welches wiederum mit einer verlagerbaren Vorrichtung, wie etwa einem Fahrzeug verbunden, vorzugsweise fest verbunden ist. Das Gehäuse bietet zum einen einen zusätzlichen Schutz des Filters vor äußeren Einflüssen und zum anderen kann das Gehäuse auf einfache Weise Anschlagsflächen, gegen die zumindest ein Teil der Halterung schlägt, bereitstellen, um das Filtermedium abzuklopfen.

Um zu verhindern, dass zwischen Gehäuse und Halterung staub- oder schadstoffbeladene Frischluft in die Fahrerkabine gelangt, ist bei einer bevorzugten Ausführungsform zwischen Halterung und Gehäuse eine flexible, staubdichte Dichtung, insbesondere ein flexibles staubdichtes Textilelement vorgesehen. Beispielsweise sind in Falten gelegte Textilelemente in der Lage, trotz Relativbewegungen zwischen dem Filter und dem Gehäuse eine staubdichte Abdichtung zwischen Filter und Gehäuse bereitzustellen.

Alternativ kann zwischen Halterung und Gehäuse ein flexibles Filtermedium vorgesehen sein.

Es ist von Vorteil, dass das Filtermedium längenveränderbar ist und beispielsweise aus einem plessierten und/oder elastischen Material hergestellt ist. Hierdurch besteht die Möglichkeit, dass das Filtermedium den Bewegung des zweiten Rahmenelements folgen und es zu einer Dehnung oder Stauchung des Filtermediums kommen kann, so dass im Filtermedium enthaltene Partikel herausgelöst werden können.

Hierfür eignen sich unter anderem auch Filtermedien aus einem gewirkten Material.

Um den aus dem Filtermedium herausgeklopften Staub oder die herausgeklopften Schadstoffe zu sammeln, ist eine Aufnahmevorrichtung zur Aufnahme von Staubpartikeln unterhalb des Filtermediums vorgesehen.

Die Filtervorrichtung ist vor allem für Filter in Form von Plattenfiltern geeignet, bei denen das Filtermedium rahmenartig von der Halterung umgeben ist. Der Filter der Filtervorrichtung kann jedoch auch eine andere Form, beispielsweise eine Schlauchform aufweisen.

Gegenstand der vorliegenden Erfindung ist auch ein Fahrzeug umfassend eine Filtervorrichtung nach einem der vorhergehenden Ansprüche. Vorzugsweise ist das verlagerbare Bauteil ein Teil der Karosserie des Fahrzeugs.

Alternativ kann das verlagerbare Bauteil ein separates Teil, wie etwa ein zusätzliches Gehäuse sein, welches wiederum mit einem Fahrzeug oder einer mobilen Arbeitsmaschine fest im Sinne von starr verbunden werden kann.

Um Wartungsstillstände zur Reinigung des Filtermediums zu reduzieren, ist es von besonderem Vorteil, dass das Fahrzeug einen Betriebszustand aufweist, in dem das Fahrzeug bestimmungsgemäß betrieben wird und in dem die Halterung gegenüber dem Bauteil beweglich ist. So kann die Reinigung des Filtermediums bereits während des bestimmungsgemäßen Betriebs des Fahrzeugs erfolgen.

Bevorzugte Ausführungsformen werden anhand der beigefügten Zeichnungen erläutert, in denen zeigen:
- Fig. 1: eine Baumaschine mit Kabinenzuluftfilter in Seitenansicht,
- Fig. 2: eine erste Ausführungsform einer Filtervorrichtung in einem ersten Betriebszustand,
- Fig. 3: die in Fig. 2 dargestellte Ausführungsform in einem zweiten Betriebszustand.

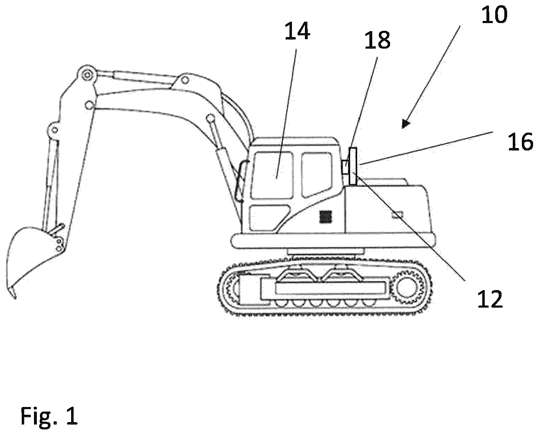

In Figur 1 ist eine Baumaschine 10 in Form eines Baggers mit einer Filtervorrichtung 12 zum Filtern der Luft, welche in die Fahrerkabine 14 strömt, gezeigt. Die Filtervorrichtung 12 umfasst ein starres Gehäuse 16, welches mittels einer Luftzuführung mit dem Innenraum der Fahrerkabine 14 verbunden ist, wobei das Gehäuse 16 starr mit der Baumaschine 10 verbunden ist.

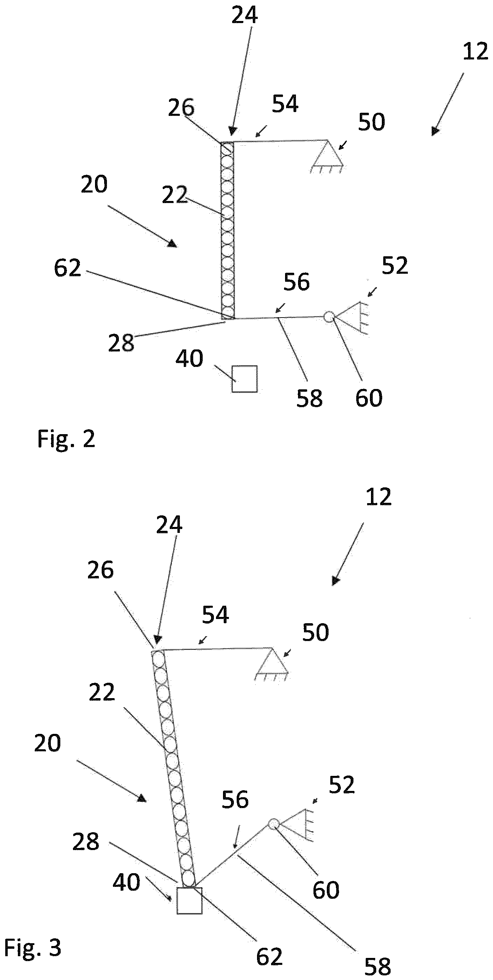

In den Figuren 2 und 3 ist eine Ausführungsform einer Filtervorrichtung 12 in zwei Betriebszuständen gezeigt. Fig. 2 stellt die Filtervorrichtung 12 im Ruhezustand der Baumaschine 10 dar, während die Fig. 3 die Filtervorrichtung zeigt, wenn die Baumaschine 10 eine Bewegungsänderung durchgeführt hat.

Das Gehäuse 16 ist quaderförmig ausgebildet und weist starre Gehäusewände, insbesondere Seitenwände, eine obere Wand und eine untere Wand auf. Im Inneren des Gehäuses 16 befindet sich der Filter 20 in Form eines Plattenfilters, wobei der Filter 20 ein Filtermedium 22 und eine rahmenartige Halterung 24 aufweist. Das Filtermedium 22 ist in die rahmenartige Halterung 24 eingespannt.

Die rahmenartige Halterung 24 umfasst ein erstes oberes Rahmenelement 26 und ein entgegengesetzt liegendes zweites unteres Rahmelement 28, sowie zwei entgegengesetzt liegende seitliche dritte und vierte Rahmenelemente, zwischen denen das Filtermedium 22 eingespannt ist. Das erste obere Rahmenelement 26 und das zweite untere Rahmenelement 28 sind starr ausgebildet, während die beiden seitlichen dritten und vierten Rahmenelemente flexibel, insbesondere dehnbar ausgebildet sind.

Das Gehäuse 16 weist eine erste Befestigungsstelle 50 und eine mit Abstand von der ersten Befestigungsstelle 50 angeordnete zweite Befestigungsstelle 52 auf.

Das erste obere Rahmenelement 26 ist mittels eines starren Verbindungselements 54 in Form einer Stange an der ersten Befestigungsstelle 50 mit dem Gehäuse 16 verbunden. Mittels des starren Verbindungselements 54 wird das obere Rahmenelement 26 mit Abstand von den seitlichen Gehäusewänden und der unteren Gehäusewand gehalten. Das starre Verbindungselement 54 ist an einer Seitenwand des Gehäuses 16 befestigt. In diesem Fall ist das starre Verbindungselement 54 länglich ausgebildet.

Wenn auch nicht dargestellt, so kann bei einem Gehäuse, das über eine obere Wand verfügt, das erste obere Rahmenelement an der oberen Wand befestigt werden, so dass der Filter mit Abstand von den Seitenwänden des Gehäuses im Gehäuse hängt. In diesem Fall ist es nicht zwingend notwendig, dass das Verbindungselement länglich ausgebildet ist. Bei dieser Ausführungsform ist es von Vorteil, dass die starre Verbindungsvorrichtung mittig an dem ersten oberen Rahmenelement angebracht ist.

Das zweite untere Rahmenelement 28 ist mittels einer beweglichen Verbindungsvorrichtung 56 beweglich gelagert. Hierbei verfügt die Verbindungsvorrichtung 56 über ein stangenartig ausgebildetes Mittelteil 58 und über ein Drehgelenk 60, welches im Bereich der zweiten Befestigungsstelle 52 vorgesehen ist. Weiterhin ist die Verbindungsstelle 62 zwischen Verbindungsvorrichtung 56 und zweitem unteren Rahmenelement 28 beweglich, insbesondere drehbar ausgebildet. Hierfür kann ein weiteres Drehgelenk an der Verbindungsvorrichtung vorgesehen sein.

Da ein Gelenk die Aufgabe hat, zwei Teile beweglich zu verbinden und in der Regel aus zwei Bauteilen besteht, die ineinandergreifen, versteht es sich, dass bei nicht dargestellten Ausführungsformen das Drehgelenk auch sowohl vollständig als auch teilweise an einem der Bauteile Gehäuse und unteres Rahmenelement vorgesehen sein kann.

Die bewegliche Verbindungsvorrichtung 56 ist mittig an dem zweiten unteren Rahmenelement 28 angebracht.

Mittels der beweglichen Verbindungsvorrichtung 56 ist das zweite untere Rahmenelement 28 mit Abstand von den Seitenwänden des Gehäuses 16 positioniert.

Unterhalb des Filters 22 ist ein Anschlag 40 vorgesehen. Im Grundzustand besteht zwischen dem zweiten unteren Rahmenelement 28 und dem Anschlag 40 ein Abstand.

Bei dem Filtermedium 22 handelt es sich um ein textiles, längenveränderbares Material, welches elastisch, insbesondere dehnbar ist.

Wenn auch nicht dargestellt, so ist zwischen dem Filter 20 und dem Gehäuse eine flexible textile Abdichtung oder weiteres Filtermaterial vorgesehen.

Das Gehäuse, das fest, im Sinne von starr mit der Baumaschine 10 verbunden ist, folgt den Bewegungsänderungen der Baumaschine 10. Da das untere Rahmenelement 28 gegenüber dem Gehäuse 16 beweglich ausgebildet ist, verlagert sich das untere Rahmenelement 28 aufgrund der Trägheit gegenüber dem Gehäuse 16. Die Bewegungsänderung der Baumaschine 10 sorgt somit dafür, dass das untere Rahmenelement 28 sich gegenüber dem Gehäuse 16 bewegt. Aufgrund des Drehgelenks 60 pendelt das Mittelteil 58 der beweglichen Verbindungsvorrichtung 56 entlang eines Kreisbogens. Da zwischen dem unteren Rahmenelement 28 und dem Mittelteil 58 eine drehbare Verbindungsstelle 62 vorgesehen ist, wird das untere Rahmenelement 28 in vertikaler Richtung und gegebenfalls auch in horizontaler Richtung bewegt. Entscheidend ist die Bewegung in vertikaler Richtung, da dadurch das untere Rahmenelement 28 nach oben und unten bewegt wird. Aufgrund der Tatsache, dass das obere Rahmenelement 26 starr mit dem Gehäuse verbunden ist, zieht das untere Rahmenelement 28 das elastische Filtermedium 22 auseinander beziehungsweise staucht es. Die Bewegung des unteren Rahmenelements 28 wird durch den Anschlag 40 nach unten begrenzt.

Wenn das Filtermedium 22 auseinandergezogen wird, können die im Filtermedium 22 befindlichen Staub- oder Schadstoffpartikel einfach aus dem Filtermedium 22 entfernt werden. Dies kann allein aufgrund der Luftbewegung der einströmenden Luft erfolgen oder aufgrund der Erschütterungen, die von der Baumaschine 10 verursacht werden. Im zuletzt genannten Fall, würde das Filtermedium 22 abgeklopft werden.

Um zu verhindern, dass bereits kleinste Bewegungsänderungen der Baumaschine 10 auf den Filter 20 übertragen werden, können, wenn auch nicht dargestellt, zusätzliche Dämpfungselemente vorgesehen sein.

Weiterhin können nicht dargestellte Schwungmassen vorgesehen sein, die beispielsweise an dem zweiten Rahmenelement befestigt sind.

Bei einer alternativen, nicht dargestellten Ausführungsform ist die bewegliche Verbindungsvorrichtung unterhalb des Filtermediums an dem unteren Rahmenelement vorgesehen, wobei die bewegliche Verbindungsvorrichtung mittels einer Linearführung oder mittels einer Feder das untere Rahmenelement des Filters mit dem Gehäuse verbindet. Bei dieser Ausführungsform kann das gesamte Filtermedium entlang seiner gesamten Breite gleichmäßig gedehnt oder gestaucht werden.

Die dargestellte Ausführungsformen eignet sich vor allem bei Filtern, die als Vorfilter für Filter hoher Reinheitsklasse eingesetzt werden.

Im Rahmen der Erfindung werden auch nicht dargestellte Ausführungsformen umfasst, bei denen einzelne Merkmale weggelassen wurden oder bei denen Merkmale unterschiedlicher Ausführungsformen kombiniert wurden.

## Patentansprüche

1. Filtervorrichtung geeignet für den Einsatz in Fahrzeugen (10) umfassend einen Filter (20) mit einem Filtermedium (22) und einer rahmenartigen Halterung (24) mit wenigstens zwei Rahmenelementen (26, 28), wobei das Filtermedium (22) in der Halterung (24) befestigt ist,
ein verlagerbares Bauteil mit einer ersten Befestigungsstelle (50) und einer zweiten Befestigungsstelle (52),
eine bewegliche Verbindungsvorrichtung (56),
eine starre Verbindungsvorrichtung (54),
wobei das erste Rahmenelement (26) mittels der starren Verbindungsvorrichtung (54) an der ersten Befestigungsstelle (50) mit dem verlagerbaren Bauteil verbunden ist, wobei das zweite Rahmenelement (28) mittels der beweglichen Verbindungsvorrichtung (56) an der zweiten Befestigungsstelle (52) mit dem verlagerbaren Bauteil verbunden ist, und wobei das zweite Rahmenelement (28) gegenüber dem verlagerbaren Bauteil beweglich ist.

2. Filtervorrichtung nach Anspruch 1, **dadurch gekennzeichnet, dass** wenigstens ein Anschlag (40) vorgesehen ist, der vorzugsweise mit dem zweiten Rahmenelement (28) der Halterung (24) wechselwirkt.

3. Filtervorrichtung nach einem der vorhergehenden Ansprüche, **dadurch gekennzeichnet, dass** das erste Rahmenelement (26) und/oder das zweite Rahmenelement (28) starr ausgebildet sind.

4. Filtervorrichtung nach einem der vorhergehenden Ansprüche, **dadurch gekennzeichnet, dass** ein drittes Rahmenelement und ein viertes Rahmenelement vorgesehen sind, wobei das dritte Rahmenelement und/oder das vierte Rahmenelement elastisch, insbesondere dehnbar sind.

5. Filtervorrichtung nach einem der vorhergehenden Ansprüche, **dadurch gekennzeichnet, dass** die bewegliche Verbindungsvorrichtung (56) ein Lager, insbesondere ein reibungsarmes Lager umfasst.

6. Filtervorrichtung nach einem der vorhergehenden Ansprüche, **dadurch gekennzeichnet, dass** die bewegliche Verbindungsvorrichtung (56) wenigstens ein Drehgelenk (60) aufweist und/oder linear beweglich ist.

7. Filtervorrichtung nach einem der vorhergehenden Ansprüche, **dadurch gekennzeichnet, dass** die Verbindungsvorrichtung ein Dämpfungselement, insbesondere eine Dämpfungsfeder aufweist.

8. Filtervorrichtung nach einem der vorhergehenden Ansprüche, **dadurch gekennzeichnet, dass** eine zusätzliche Masse an dem zweiten Rahmenelement befestigt ist.

9. Filtervorrichtung nach einem der vorhergehenden Ansprüche, **dadurch gekennzeichnet, dass** das verlagerbare Bauteil ein Gehäuse (16) aufweist, an dem die erste Befestigungsstelle (50) und die zweite Befestigungsstelle (52) vorgesehen sind, und dass das Gehäuse (16) den Filter (20) umgibt.

10. Filtervorrichtung nach Anspruch 9, **dadurch gekennzeichnet, dass** der Bereich zwischen Halterung (24) und Gehäuse (16) staubdicht ist, wobei vorzugsweise zwischen Halterung (24) und Gehäuse (16) eine flexible, staubdichte Dichtung, insbesondere ein flexibles staubdichtes Textilelement vorgesehen ist.

11. Filtervorrichtung nach einem der vorhergehenden Ansprüche, **dadurch gekennzeichnet, dass** das Filtermedium (22) aus einem gewirkten Material gebildet ist.

12. Filtervorrichtung nach einem der vorhergehenden Ansprüche, **dadurch gekennzeichnet, dass** das Filtermedium (22) längenveränderbar ist und insbesondere aus einem plessierten und/oder elastischen Material hergestellt ist.

13. Fahrzeug umfassend eine Filtervorrichtung (12) nach einem der Ansprüche 1 bis 12.

14. Fahrzeug nach Anspruch 13, **dadurch gekennzeichnet, dass** das verlagerbare Bauteil Teil der Karosserie des Fahrzeugs (10) ist.

15. Fahrzeug nach einem der Ansprüche 13 oder 14, **dadurch gekennzeichnet, dass** das Fahrzeug einen Betriebszustand aufweist, in dem das Fahrzeug bestimmungsgemäß betrieben wird und dass in dem Betriebszustand die Halterung gegenüber dem Bauteil beweglich ist.
